# EUROPÄISCHE PATENTSCHRIFT

(11) **EP 4 252 530 B1**
(45) Veröffentlichungstag und Bekanntmachung des Hinweises auf die Patenterteilung: **15.04.2026**
(21) Anmeldenummer: 23162257.2
(22) Anmeldetag: 16.03.2023
(51) Int. Cl.: A01K 15/02

(54) **BESCHÄFTIGUNGSVORRICHTUNG FÜR HAUSTIERE**
APPARATUS FOR OCCUPATION OF PETS
DISPOSITIF POUR OCCUPER DES ANIMAUX DOMESTIQUES

(30) Priorität: 31.03.2022 DE 202022101730 U
(43) Veröffentlichungstag der Anmeldung: 04.10.2023
(73) Patentinhaber: Davids, Julia, 44289 Dortmund (DE)
(72) Erfinder: Davids, Julia, 44289 Dortmund (DE)
(74) Vertreter: Andrejewski - Honke Patent- und Rechtsanwälte Partnerschaft mbB

(56) Entgegenhaltungen:
- US-A- 6 076 486
- US-A1- 2007 044 730
- US-A1- 2016 106 068
- US-A1- 2019 133 082
- US-B1- 10 149 459

## Beschreibung

Die Erfindung betrifft eine Beschäftigungsvorrichtung (z.B. ein Spielzeug) für Haustiere, insbesondere für Hunde oder Katzen, mit zumindest einem für die Beschäftigung des Haustieres ausgebildeten Träger, der zumindest eine taschenartige Aufnahme aufweist, in die ein zum (vollständigen) Verzehr durch das Haustier geeigneter Verzehrblock einsetzbar ist. Der Träger ist z.B. als Spielzeug ausgebildet, mit welchem sich das Haustier (selbstständig) beschäftigen kann.

Für die selbstständige Beschäftigung von Haustieren werden in der Praxis Spielzeuge angeboten, die z.B. als Kauspielzeuge. z.B. aus nicht verzehrbarem Kunststoff oder alternativ auch vollständig aus verzehrbarem Material hergestellt sind.

Außerdem kennt man Beschäftigungsvorrichtungen bzw. Spielzeuge, die mit Öffnungen oder Ausnehmungen versehen sind, in die ein Futterstück einsetzbar ist, sodass das Haustier während des Spielens versucht, das Tierfutterstück zu lösen. Ein solches Spielzeug wird z.B. in der DE 697 02 856 T2 beschrieben. Dieser Spielzeuggegenstand weist einen Träger mit mehreren Ausnehmungen auf, in welche Futterstücke eingesetzt werden. Alternativ können in die Ausnehmungen auch flüssige oder pastenförmige Futtermittel eingebracht werden, die haftend in den Ausnehmungen gehalten werden. Das Spielzeug selbst wird während des Spielens nicht zerstört, sodass es wieder verwendbar ist.

Eine weitere Ausführungsform eines Kauspielzeuges ist z.B. aus der US 7 032 541 B1 bekannt. Dieses weist außenumfangsseitig eine Vielzahl von Nuten auf, in welche z.B. Futterstücke einsetzbar sind. Außerdem kann das Spielzeug einen Hohlraum aufweisen, der mit einer Flüssigkeit gefüllt wird, die aus Öffnungen austreten kann.

Ferner sind aus dem Stand der Technik Spielzeuge für Haustiere bekannt, die einen verschließbaren Hohlraum bilden, sodass in den Hohlraum Futtermittel eingebracht werden können (vergleiche US 9 961 880 B2).

Die EP 2 827 705 B1 beschreibt ein Spielzeugprodukt für Haustiere mit einem ringförmigen Träger, in den eine essbare Belohnung für ein Haustier einsetzbar ist, wobei diese essbare Belohnung mit einer umlaufenden Nut versehen ist, in die ein korrespondierender Vorsprung des Spielzeuges eingreift.

Außerdem besteht in der Praxis das Bedürfnis, Spielzeuge bzw. Beschäftigungsvorrichtungen zur Verfügung zu stellen, mit denen sich Haustiere bei hohen, sommerlichen Temperaturen zur Abkühlung beschäftigen können.

Dazu wird in der CN 214126514 U ein Spielzeug in Form eines knochenartigen Trägers beschrieben, in dessen Innenraum ein rohrförmiger, geschlossener Flüssigkeitsbehälter einsetzbar ist, wobei der mit Flüssigkeit gefüllte Flüssigkeitsbehälter gefroren und zur Kühlung des Spielzeuges in den Hohlraum eingesetzt wird, ohne dass die Flüssigkeit auslaufen kann. In diesem Fall dient die Flüssigkeit ausschließlich der Kühlung, d.h. sie ist nicht für den Verzehr bestimmt.

Demgegenüber beschreibt die CN 205389926 U ein Spielzeug für Haustiere, das einerseits einen zentralen Hohlraum für die Kühlung des Spielzeuges aufweist und andererseits separate Hohlräume, die mit einer Flüssigkeit füllbar sind, sodass während des Spielens über kleine Öffnungen gekühlte Flüssigkeit austreten und von dem Haustier aufgenommen werden kann. Das Spielzeug kann z.B. aus zwei miteinander verbindbaren Halbschalen bzw. aus einer Basis und einem Deckel bestehen, die nach dem Einsetzen von Eis in den kühlbaren Hohlraum und nach dem Einfüllen der Flüssigkeit miteinander verbunden und dadurch verschlossen werden.

Schließlich ist auch spezielles Speiseeis für Hunde bekannt. Dazu wurde auch ein Eis für Hunde in Cupcake-Form in einer vollständig essbaren Waffel vorgeschlagen, sodass das gesamte Produkt essbar ist (vgl. DE 20 2021 002 286 U1). US 2007/044730 A1, US 2019/133082 A1, US 10 149 459 B1, US 6 076 486 A und US 2016/106068 A1 sind weitere Beschäftigungsvorrichtung für Haustiere, mit zumindest einem für die Beschäftigung des Haustieres ausgebildeten Trägers, der zumindest eine taschenartige Aufnahme aufweist.

Ausgehend von dem vorbekannten Stand der Technik liegt der Erfindung die Aufgabe zugrunde, eine Beschäftigungsvorrichtung für Haustiere, insbesondere für Hunde oder Katzen, zu schaffen, die ein für das Haustier gefahrloses Spielen bei vorzugsweise gleichzeitiger Abkühlung ermöglicht und die sich zugleich durch eine hygienische Handhabung und Wiederverwendbarkeit auszeichnet.

Zur Lösung dieser Aufgabe lehrt die Erfindung bei einer gattungsgemäßen Beschäftigungsvorrichtung der eingangs beschriebenen Art nach einem ersten Aspekt, dass die taschenartige Aufnahme (in dem spielzeugartigen Träger) derart ausgebildet ist, dass der Verzehrblock, z.B. ein Eisblock, in einer Einsteckposition in die Aufnahme einführbar und aus der Einsteckposition in eine Halteposition drückbar und dadurch in der Aufnahme arretierbar (und vorzugsweise formschlüssig gehalten) ist. Dabei ist der Verzehrblock in der Aufnahme gegen ein Herausfallen formschlüssig gehalten, da der Verzehrblock derart in der Halteposition arretiert ist, dass er nicht selbstständig (d.h. nicht ohne gezielte, aktive Betätigung einer Person) aus der Halteposition in die Einsteckposition gelangt.

Erfindungsgemäß weist die Aufnahme einen Haltebereich (als ersten Bereich) auf, ir welchem der Verzehrblock in der Halteposition gehalten ist, und außerdem einen Einsteckbereich (als zweiten Bereich) aufweisen, in welchen der Verzehrblock während des Einsteckens einführbar ist. Dabei ist vorgesehen, dass der Einsteckbereich nach dem Arretieren des Verzehrblocks selbst frei bleibt und dass der Verzehrblock nicht selbstständig aus dem Haltebereich in den Einsteckbereich gelangt. Der Einsteckbereich kann ein gegenüber dem Haltebereich vertiefter Hohlraum und folglich eine Vertiefung sein.

Nach einem zweiten Aspekt der Erfindung mit selbstständiger Bedeutung handelt es sich bei dem Verzehrblock bevorzugt um einen gefrorenen Eisblock, der im gefrorenen Zustand in die Aufnahme einsteckbar ist oder eingesteckt und darin fixiert bzw. gehalten wird. Der Eisblock wird bevorzugt formschlüssig und/oder kraftschlüssig in der Aufnahme gehalten und z.B. in die Aufnahme eingeclipst oder eingerastet. Besonders bevorzugt wird der Eisblock in der oben beschriebenen Weise in der Aufnahme arretiert.

Mit der Erfindung wird eine neuartige Beschäftigungsvorrichtung für Haustiere und insbesondere für Hunde oder Katzen zur Verfügung gestellt, die in bevorzugter Ausführungsform als Eisspielzeug ausgebildet ist. Dazu besteht die Beschäftigungsvorrichtung zumindest oder im Wesentlichen aus einem als Spielzeug ausgebildeten Träger, der mit der taschenartigen (offenen) Aufnahme ausgerüstet ist, in die der Verzehrblock (z.B. der Eisblock) einsetzbar ist oder eingesetzt wird. und zwar derart, dass er für das Tier beim Spielen zugänglich ist, sodass es die Oberfläche z.B. abschlecken kann. Der Block wird dabei nicht in dem Träger und folglich in dem Spielzeug selbst erzeugt, sodass das Spielzeug nicht selbst in einen Gefrierschrank eingelegt werden muss. Vielmehr erfolgt die Herstellung des Eisblocks (oder eines anderen Verzehrblocks) separat und unabhängig von dem Spielzeug, z.B. mithilfe einer separat zur Verfügung gestellten Zubereitungsform als Eiswürfelzubereiter, auf welchen im Folgenden noch näher eingegangen wird. Damit ist eine besonders hygienische Handhabung gewährleistet und außerdem besteht durch die separate Herstellung der Eiswürfel die Möglichkeit, diese in größerer Zahl unabhängig von dem einzelnen Spielzeug herzustellen und das Spielzeug z.B. nachzufüllen, ohne dass das Spielzeug selbst für die Zubereitung der Eisblöcke benötigt wird.

Von besonderer Bedeutung ist außerdem die einfache und zugleich sichere Befestigung des Eisblocks bzw. Verzehrblocks an dem Spielzeug bzw. Träger, sodass das Tier den Block schlecken oder daran lecken oder auch knabbern kann und dabei das Spielzeug auch beliebig bewegen kann, ohne dass der Block selbst aus dem Träger herausfällt. Es wird insbesondere verhindert, dass das Tier den Block sehr einfach aus dem Träger entfernen und vollständig verzehren kann, sodass insgesamt sichergestellt ist, dass sich das Tier über einen längeren Zeitpunkt mit dem Spielzeug und dem darin gehaltenen Eisblock (oder eines anderen Verzehrblocks) beschäftigen kann.

Dabei geht die Erfindung auch von der Erkenntnis aus, dass sich der Verzehrblock und insbesondere ein Eisblock formstabil und haltbar herstellen lässt, z.B. als formstabiles Wassereis, und dass sich ein solcher formstabiler Verzehrblock in einer speziell ausgestalteten Aufnahme des Spielzeuges in der erfindungsgemäßen Weise einfach und zuverlässig fixieren lässt. Dazu ist die taschenartige Aufnahme bevorzugt in der beschriebenen Weise mit dem Haltebereich einerseits und dem Einsteckbereich andererseits ausgebildet und der Verzehrblock, z.B. Eisblock, ist derart an die taschenartige Aufnahme angepasst, dass sich der Verzehrblock (zunächst) in einer Einsteckposition in die Aufnahme einführen und (anschließend) aus der Einsteckposition in die Halteposition drücken und damit in der Aufnahme fixieren lässt. So ist z.B. vorgesehen, dass der Verzehrblock nach dem Einführen in die Einsteckposition anschließend durch eine Schwenkbewegung in die Halteposition gedrückt und dadurch formschlüssig in der Aufnahme, nämlich in dem Haltebereich der Aufnahme arretiert wird. Da der Verzehrblock in der Halteposition formschlüssig in dem Haltebereich der Aufnahme arretiert ist, lässt er sich in dieser Position nicht aus dem Träger entnehmen. Um den Verzehrblock überhaupt aus der Aufnahme entnehmen zu können, muss er zunächst aktiv in die Einsteckposition zurückgeführt werden. Die Konstruktion ist dabei so realisiert, dass dieses Zurückführen nicht ohne ausdrückliche, geschickte Bewegung des Verzehrblocks (durch einen menschlichen Nutzer) möglich ist, sodass auch bei aktivem Spielen des Tieres der Verzehrblock nicht aus der Aufnahme herausfallen kann. Es ist z.B. ein Widerstand zu überwinden, der durch einen Bereich des Blocks gebildet werden kann, z.B. eine Kontur oder Nase, die über eine Kontur der Aufnahme gedrückt werden muss, die z.B. federnd ausgebildet sein kann. Dazu wird auch beispielhaft auf die Figurenbeschreibung verwiesen. Alternativ zu einer Schwenkbewegung kann der Block auch durch eine andere Art der Bewegung aus der Einsteckposition in die Halteposition überführt werden, z.B. durch eine Drehbewegung (nach Art eines Bajonettverschlusses) oder durch eine Verschiebung.

Wesentlicher Bestandteil des erfindungsgemäßen Spielzeuges ist der beschriebene Träger, der eine taschenartige Aufnahme aufweist und der das Spielzeug bildet. Dieser Träger ist als Spielzeug so ausgebildet, dass er durch das Haustier nicht zerstört wird und insbesondere nicht verschluckbar ist und auch keine verschluckbaren Teile umfasst. Der Träger weist folglich eine ausreichend große Dimension auf und ist stabil hergestellt. Er kann z.B. die Form eines Knochens oder einer Flasche oder einer Dose oder auch andere Formen zum Spielen aufweisen, die die Ausgestaltung der erfindungswesentlichen, taschenartigen Aufnahme ermöglichen, in welche z.B. der Eisblock einsetzbar ist. So kann der Träger besonders bevorzugt einstückig und ohne jegliche verschluckbare Teile ausgebildet sein, z.B. als einstückiges Kunststoffteil. Der Träger kann auch aus verschiedenen Materialien, z.B. als Verbundkörper hergestellt sein. Insbesondere im Falle eines Kunststoffteils kann es sich um ein Spritzgussteil handeln, das sich einfach und kostengünstig auch in großen Stückzahlen herstellen lässt. Grundsätzlich sind aber auch andere Fertigungsarten vom Schutzumfang erfasst. Wichtig ist, dass das Tier sich ausschließlich mit dem sicher zu handhabenden Träger und dem darin eingesetzten Eisblock/ Verzehrblock beschäftigt, sodass keine Verletzungsgefahr (z.B. durch verschluckbare Teile) besteht.

Die taschenartige Aufnahme weist z.B. eine obere Öffnung auf, durch welche der Eisblock eingesetzt wird. Diese obere Öffnung kann in der Draufsicht z.B. eine rechteckige Eintrittsfläche bilden, die kleiner als die Grundfläche des Verzehrblockes ist. Unter dieser Eintrittsfläche kann sich die taschenartige Aufnahme bzw. dessen Querschnitt zumindest bereichsweise aufweiten. Diese Konstruktion gewährleistet, dass der Verzehrblock nach dem Einsetzen nicht aus der Aufnahme herausfallen kann. Durch die zuvor beschriebene, bevorzugte Gestaltung mit Einsteckbereich einerseits und Haltebereich andererseits wird dennoch eine einfache Montage des Eisblocks in der Aufnahme gewährleistet.

Die taschenartige Aufnahme kann in einer bevorzugten Konstruktion z.B. einen gestuften Boden mit einer dem Haltebereich zugeordneten, ersten Bodenfläche und einer dem Einsteckbereich zugeordneten, zweiten Bodenfläche aufweisen. Bevorzugt ist die zweite Bodenfläche gegenüber der ersten Bodenfläche vertieft angeordnet, sodass der Einsteckbereich eine Vertiefung gegenüber dem Haltebereich bildet. Die zweite Bodenfläche kann z.B. gegenüber der ersten Bodenfläche abgewinkelt sein (siehe Figurenbeschreibung).

Wesentlicher Bestandteil der erfindungsgemäßen Vorrichtung ist der beschriebene Träger, der das Spielzeug selbst bildet. Bevorzugt umfasst die Vorrichtung außerdem den bereits beschriebenen Verzehrblock, z.B. einen oder mehrere Eisblöcke, der bzw. die bevorzugt derart an die taschenartige Aufnahme des Trägers angepasst ist/sind, dass der Verzehrblock in einer Einsteckposition in die Aufnahme einführbar und aus der Einsteckposition in eine Halteposition drückbar und dadurch in der Aufnahme fixierbar ist und in der Aufnahme (formschlüssig) gehalten wird. Dieser Verzehrblock, der bevorzugt als Eisblock ausgebildet ist, kann (in der Draufsicht) eine z.B. rechteckförmige Grundfläche aufweisen. Bevorzugt weist der Verzehrblock einen von der Rechteckform abweichenden Querschnitt auf, d.h. in einem Vertikalschnitt ist der Verzehrblock nicht rechteckig ausgebildet. Bevorzugt weist der Verzehrblock zwei parallele Seitenflächen auf. Die von den Seitenflächen zu unterscheidende Vorderfläche und Rückfläche sind bevorzugt nicht parallel, sondern z.B. gegeneinander geneigt orientiert. Dieses lässt sich z.B. dadurch realisieren, dass der Verzehrblock im Querschnitt asymmetrisch mit einer gegenüber der Rückfläche verkürzten Vorderfläche ausgebildet ist und z.B. ein keilförmig zulaufendes Einsteckende aufweist. Auch dazu wird beispielhaft auf die Figurenbeschreibung verwiesen.

Die erfindungsgemäße Vorrichtung kann außerdem eine Zubereitungsform für die Zubereitung des Verzehrblocks und insbesondere für die Zubereitung eines Eisblocks aufweisen, wobei eine solche Zubereitungsform zumindest einen Formraum aufweist, der die Außenmaße des Verzehrblocks/Eisblocks definiert. Optional besteht auch die Möglichkeit, eine Zubereitungsform mit einer Vielzahl von Formräumen zur Verfügung zu stellen, sodass zeitgleich mehrere Eisblöcke hergestellt werden können, so wie man es z.B. bei Eiswürfelformern für die herkömmliche Herstellung von Eiswürfeln kennt. Erfindungsgemäß sind die einzelnen Formräume jedoch derart dimensioniert und geformt, dass damit Eisblöcke hergestellt werden, die in die taschenartige Aufnahme des spielzeugartigen Trägers einsetzbar und darin fixierbar sind. Die Erfindung stellt folglich auch einen Set bzw. Bausatz zur Verfügung, der den spielzeugartigen Träger einerseits und die Zubereitungsform für die Herstellung der Verzehrblöcke bzw. Eisblöcke umfasst. Diese Zubereitungsform ist besonders bevorzugt für die Zubereitung eines oder mehrere Eisblöcke ausgebildet. Zur Herstellung der Eisblöcke wird der Formraum mit einer Flüssigkeit, z.B. mit Wasser, gefüllt und anschließend in einem Gefrierschrank gefroren. Die Eisblöcke lassen sich danach entnehmen und in der erfindungsgemäßen Weise in den spielzeugartigen Träger einsetzen, ohne dass der Träger selbst in den Gefrierschrank gelegt werden muss. Dieses ist besonders hygienisch, da keine Teile, mit denen das Tier in Kontakt kommt, in den Gefrierschrank gelegt werden müssen.

Die Zubereitungsform weist einen Formraum auf, dessen Geometrie derart an die Geometrie der Aufnahme des Trägers angepasst ist, dass der in dem Formraum hergestellte Verzehrblock, z.B. Eisblock formschlüssig und/oder kraftschlüssig in der Aufnahme fixierbar ist, z.B. in diese eingerastet, eingeclipst und/oder eingeklemmt ist.

Dabei liegt es im Rahmen der Erfindung, dass der Formraum derart dimensioniert und geformt ist, dass damit ein Eisblock der beschriebenen Art hergestellt werden kann, der in der beschriebenen Weise in die taschenartige Aufnahme einführbar und in dieser arretierbar ist, indem der Verzehrblock/ Eisblock in eine Einsteckposition in die Aufnahme einführbar und aus der Einsteckposition in eine Halteposition drückbar und dadurch in der Aufnahme arretierbar ist.

Bei dem Verzehrblock handelt es sich - wie bereits beschrieben - bevorzugt um einen Eisblock aus einer gefrorenen Flüssigkeit. Dabei kann es sich insbesondere um Wasser mit geschmacklichen Zusätzen handeln, die die Beschäftigung für das Tier besonders attraktiv machen. So lässt sich z.B. Brühe mit tierischen Bestandteilen zusetzen, für Hunde z.B. Fleischbrühe. Bei einer Verwendung für Katzen können z.B. auch Flüssigkeiten mit Fischzusätzen verwendet werden. Bevorzugt werden Bestandteile mit wenig Fett verwendet, damit besonders harte Eisblöcke nach Art eines Wassereises hergestellt werden, die anschließend sicher und für einen längeren Zeitraum in dem Träger gehalten werden.

Bevorzugt wird der Block, z.B. Eisblock bei der Herstellung (in der Zubereitungsform) so dimensioniert, dass er derart in der Aufnahme, z.B. in der Halteposition an dem spielzeugartigen Träger gehalten ist, dass der Block mit seiner Oberfläche über die Aufnahme des Trägers herausragt. Damit wird eine über die Oberfläche des Spielzeuges herausragende Leckfläche bzw. Abschleckfläche für das Tier zur Verfügung gestellt, die zumindest zu Beginn der Beschäftigung einfach zugänglich ist. Damit nimmt das Tier das Spielzeug schnell und gerne an.

Der erste Aspekt der Erfindung bezieht sich auf die im Kennzeichnungsteil des Anspruchs 1 definierte Ausgestaltung der taschenartigen Aufnahme. Dabei kann grundsätzlich ein beliebiger Verzehrblock zum Einsatz kommen, der für den Verzehr durch das Haustier und insbesondere für den vollständigen Verzehr bestimmt und geeignet ist. Besonders bevorzugt wird ein Eisblock als Verzehrblock eingesetzt. Der zweite Aspekt der Erfindung bezieht sich auf die in Anspruch 2 definierte Verwendung eines Eisblocks als Verzehrblock, der in einer taschenartigen Aufnahme des Trägers gehalten wird. Der Eisblock kann formschlüssig und/oder kraftschlüssig in der Aufnahme gehalten werden, z.B. eingeclipst, eingerastet und/oder eingeklemmt. Besonders bevorzugt wird auch bei der Verwendung eines Eisblocks als Verzehrblock die in Anspruch 1 definierte formschlüssige Arretierung realisiert, d. h. die beiden, in Anspruch 1 einerseits und Anspruch 2 andererseits definierten Aspekte der Erfindung werden bevorzugt miteinander kombiniert. Besonders bevorzugt wird der erfindungsgemäße Träger in Kombination mit einer daran angepassten Zubereitungsform für zumindest einen Verzehrblock, z.B. Eisblock zur Verfügung gestellt.

Die Herstellung und der Einsatz eines Eisblocks stellt eine Ausführungsform der Erfindung dar, d.h. bei dem Verzehrblock kann es sich um einen Eisblock handeln. Die Erfindung umfasst aber auch (formstabile) Verzehrblöcke anderer Art, z.B. Backwaren bzw. Backprodukte nach Art eines Kekses oder Kuchens (z.B. Hundekuchens). Auch ein solcher Keks oder Hundekuchen lässt sich als Verzehrblock in der erfindungsgemäßen Weise in die Aufnahme des Trägers einsetzen. Interessant ist dabei, dass sich die beschriebene Zubereitungsform nicht nur zur Herstellung von Eisblöcken in einem Gefrierschrank, sondern auch als Backform für die Herstellung von Backwaren (Backprodukten) in einem Backofen verwenden lässt. Die Zubereitungsform kann z.B. aus Kunststoff, z.B. aus Silikon oder dergleichen bestehen.

**Im** Folgenden wird die Erfindung anhand von Zeichnungen erläutert, die lediglich ein Ausführungsbeispiel darstellen. Es zeigen:
- Fig. 1: eine erfindungsgemäße Beschäftigungsvorrichtung in einer perspektivischen Ansicht,
- Fig. 2: einen Vertikalschnitt durch den Gegenstand nach Fig. 1 ohne eingesetzten Verzehrblock,
- Fig. 3: den Gegenstand nach Fig. 2 mit einem Verzehrblock in der Einsteckposition,
- Fig. 4: den Gegenstand nach Fig. 2 mit dem Verzehrblock in der Halteposition, und
- Fig. 5: eine Zubereitungsform für die Herstellung eines Eisblocks für die Vorrichtung nach Fig. 1.

In den Figuren ist beispielhaft eine erfindungsgemäße Beschäftigungsvorrichtung als Spielzeug für Haustiere, z.B. für Hunde oder alternativ auch für Katzen, dargestellt. Wesentlicher Bestandteil bzw. Basis dieses Spielzeuges ist ein Träger 1, der in seiner Dimension und Beschaffenheit für die selbstständige Beschäftigung des Haustieres ausgebildet ist und der im Ausführungsbeispiel die Form eines Knochens aufweist. Der Träger 1 weist zumindest eine taschenartige Aufnahme 2 auf, die von einem einseitig (oben) offenen Hohlraum in dem Träger 1 gebildet wird. In diese Aufnahme 2 ist bzw. wird als selbstständiger Bestandteil ein sogenannter Verzehrblock 3 eingesetzt, der vollständig zum Verzehr durch das Haustier geeignet ist. Im Ausführungsbeispiel und in besonders bevorzugter Ausführungsform handelt es sich bei diesem Verzehrblock 3 um einen Eisblock 3 aus gefrorenem Eis, sodass dieser Eisblock 3 in die taschenartige Aufnahme 2 des Trägers 1 eingesetzt wird. Dabei ist in den Figuren erkennbar, dass dieser Eisblock so dimensioniert ist, dass er im eingesetzten Zustand mit einer Oberfläche 16 über die Aufnahme 2 des Trägers herausragt, sodass die Oberfläche 16 für das Tier gut zugänglich ist und gleichsam eine "Abschleckfläche" bildet. Das Tier kann sich folglich mit dem Spielzeug beschäftigen und dieses beliebig bewegen und dabei den in den Träger 1 eingesetzten Eisblock 3 abschlecken.

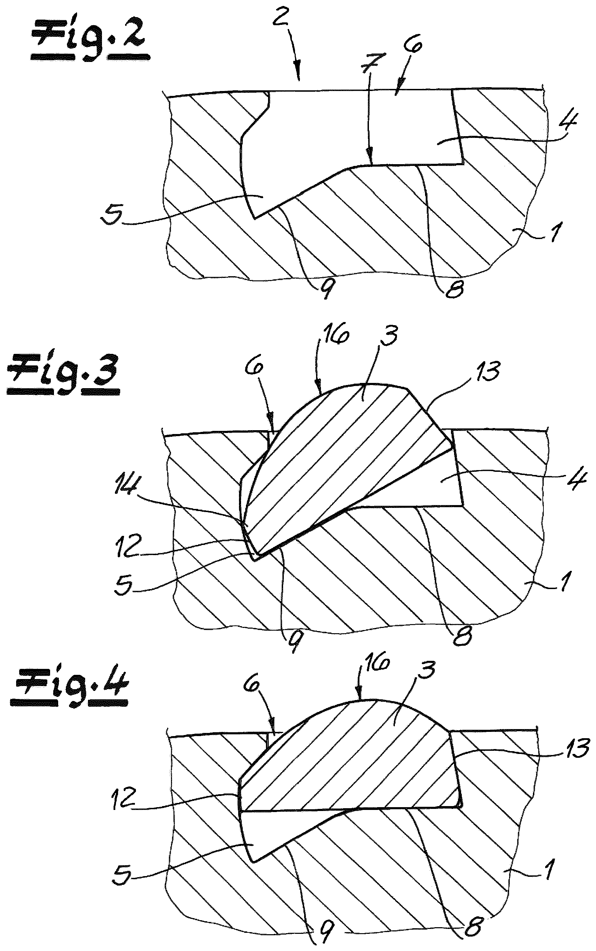

Von besonderer Bedeutung ist die Ausgestaltung der taschenartigen Aufnahme 2 und die daran angepasste Formgebung des Eisblocks 3. Denn die taschenartige Aufnahme 2 ist im Ausführungsbeispiel derart ausgebildet und der Eisblock 3 ist derart an die Form der taschenartigen Aufnahme 2 angepasst, dass der Eisblock 3 in einer ersten Position, der sogenannten Einsteckposition, in die Aufnahme 2 eingeführt wird und anschließend aus dieser Einsteckposition in eine zweite Position, die sogenannte Halteposition gedrückt wird und dadurch in der Aufnahme 2 arretiert wird. Die Vorrichtung ist dabei so konstruiert, dass der in die Aufnahme 2 eingesetzte und in der Halteposition gehaltene Eisblock 3 nicht selbstständig aus der Halteposition (zurück) in die Einsteckposition gelangt. Dadurch ist der Eisblock in der Aufnahme gegen ein Herausfallen formschlüssig gehalten. Der Eisblock lässt sich einfach in die Einsteckposition einführen und danach in die Halteposition drücken. Aus dieser Halteposition kann der Eisblock jedoch nicht aus der Aufnahme 2 entnommen werden, ohne den Eisblock 3 zuvor in die Einsteckposition zurückzuführen. Dieses wird im Folgenden anhand einer vergleichenden Betrachtung der Figuren 2 bis 4 näher erläutert.

Die Aufnahme 2 weist einen Haltebereich 4 auf, in dem der Eisblock 3 in der Halteposition gehalten ist. Ferner weist die Aufnahme 2 einen Einsteckbereich 5 auf, in den der Eisblock 3 während des Einsteckens eingeführt wird, wobei der Einsteckbereich 5 nach dem anschließenden Arretieren in dem Haltebereich 4 freibleibt, d.h. der Eisblock 3 befindet sich, sobald er in den Haltebereich 4 gelangt, nicht mehr in dem Einsteckbereich. Der Eisblock 3 kann auch nicht selbstständig aus dem Haltebereich 4 in den Einsteckbereich 5 gelangen. Vielmehr muss er dazu von einem (menschlichen) Benutzer aktiv aus dem Haltebereich 4 zurück in den Einsteckbereich 5 gedrückt werden. **In** dem dargestellten Ausführungsbeispiel ist der Einsteckbereich 5 ein gegenüber dem Haltebereich 4 vertiefter Hohlraum.

Der Träger 1 bildet ein Spielzeug, das durch das Haustier nicht zerstörbar und auch nicht verschluckbar ist. In dem dargestellten Ausführungsbeispiel handelt es sich um einen einstückig gefertigten Träger 1, der z.B. einstückig und vollständig aus Kunststoff hergestellt ist, z.B. als Spritzgussteil. In diesen Träger 1 ist die Aufnahme 2 eingeformt, in die für die Benutzung der Eisblock 3 eingesetzt wird.

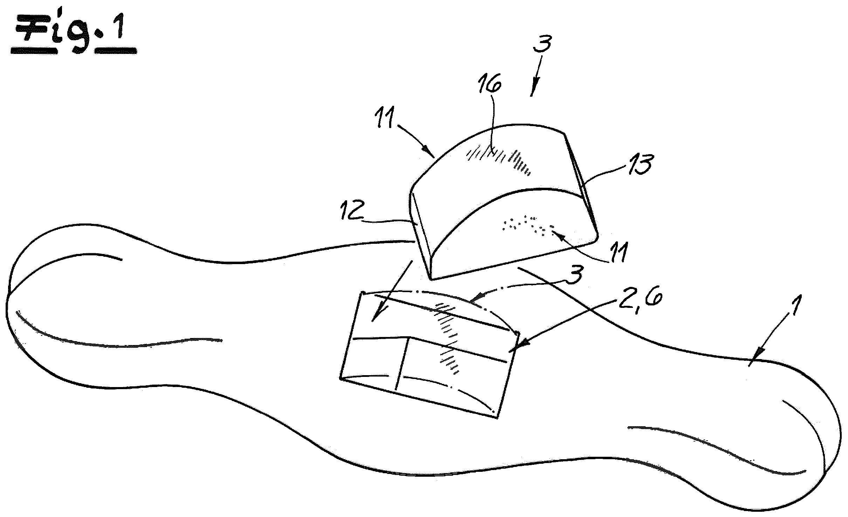

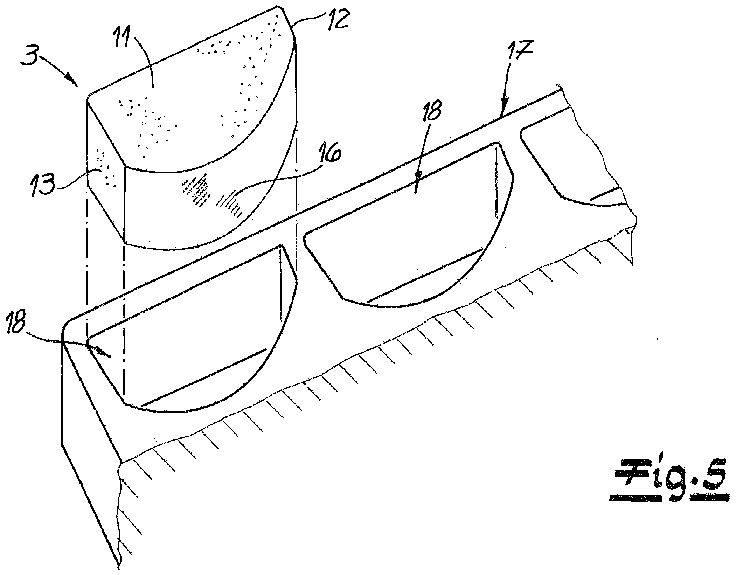

Von besonderer Bedeutung ist, dass der Eisblock 3 in seiner Form an die Form der Aufnahme 2 innerhalb des Trägers 1 angepasst ist. Dazu wird der Eisblock 3 mit einer speziell dafür vorgesehenen (und in Fig. 5 dargestellten) Zubereitungsform 17 hergestellt, die zumindest einen Formraum 18 aufweist, der die Dimension des Eisblocks 3 definiert. Der Formraum 18 wird mit einer Flüssigkeit, z.B. mit Wasser, gefüllt und in einem Gefrierschrank gefroren, sodass der Eisblock 3 gebildet wird. Dieser lässt sich anschließend entnehmen und in der Aufnahme 2 des Trägers 1 arretieren. Fig. 1 zeigt die Vorrichtung mit dem Träger 1 und dem noch nicht eingesetzten Eisblock 3.

Die Benutzung wird beispielhaft anhand der Figuren 2 bis 4 wie folgt erläutert:
Fig. 2 zeigt den Träger 1 ohne den eingesetzten Eisblock, d.h. es ist der einstückige Träger 1 ohne jegliche verschluckbare Teile dargestellt. Für diesen Träger 1 wird nun mithilfe der in Fig. 5 dargestellten Zubereitungsform 17 ein Eisblock 3 hergestellt und aus der Form 17 entnommen.

Zum Befestigen des Eisblocks 3 in bzw. an dem Träger 1 wird dieser Eisblock 3 zunächst gemäß Fig. 3 in einer (schrägen) Einsteckposition in die Aufnahme 2, nämlich in deren Einsteckbereich 5 eingeführt. Nachdem der Eisblock 3 die in Fig. 3 dargestellte Einsteckposition erreicht hat, wird er in die in Fig. 4 dargestellte Halteposition überführt, in welcher der Eisblock 3 in den Haltebereich 4 der Aufnahme 2 gelangt. In dem dargestellten Ausführungsbeispiel wird der Eisblock 3 nach dem Einführen in die Einsteckposition durch eine Schwenkbewegung in die Halteposition und damit in den Haltebereich 4 gedrückt und dadurch formschlüssig in der Aufnahme 2 arretiert (vgl. Fig. 4).

Dabei ist in den Figuren erkennbar, dass die taschenartige Aufnahme 2 eine obere Öffnung 6 aufweist, die in der Draufsicht eine rechteckförmige Eintrittsfläche bildet und dass sich der Querschnitt der Aufnahme 2 unter dieser Eintrittsfläche aufweitet. Dadurch ist gewährleistet, dass der Block 3 in der in Fig. 4 dargestellten Halteposition nicht ohne weiteres nach oben aus der Aufnahme 2 entnommen und in umgekehrter Orientierung des Trägers 1 auch nicht aus der Aufnahme 2 herausfallen kann. Außerdem ist erkennbar, dass die Aufnahme 2 einen gestuften Boden 7 mit einer dem Haltebereich 4 zugeordneten ersten Bodenfläche 8 und einer dem Einsteckbereich 5 zugeordneten zweiten Bodenflächen 9 aufweist, wobei die zweite Bodenflächen 9 gegenüber der ersten Bodenfläche 8 vertieft und dabei abgewinkelt ist. Der Eisblock 3 selbst hat in der Draufsicht eine rechteckförmige Grundfläche. Wichtig ist, dass der Eisblock in einem Vertikalschnitt nicht rechteckig ausgebildet ist. Er weist zwar zwei parallele Seitenflächen 11 auf. Die Vorderfläche 12 und die Rückfläche 13 sind jedoch nicht parallel zueinander orientiert, sondern gegeneinander geneigt. Außerdem ist erkennbar, dass der Eisblock 3 im Querschnitt asymmetrisch mit einer gegenüber der Rückfläche 13 verkürzten Vorderfläche 12 ausgebildet ist, sodass ein gleichsam keilförmig zulaufendes Einsteckende gebildet wird. Der Eisblock 3 wird folglich in der Einsteckposition mit dem keilförmig zulaufenden Einsteckende in den Einsteckbereich 5 der Aufnahme 2 gesteckt und anschließend in die Halteposition gedrückt. Dabei ist erkennbar, dass in dieser Halteposition der Einsteckbereich 5 frei ist und auch frei bleibt. Der Eisblock 3 lässt sich aus der Aufnahme 2 nicht entnehmen, ohne ihn zuvor zurück in die Einsteckposition zu überführen. Um den Eiswürfel 3 entnehmen zu können, müsste er folglich zunächst aus der in Fig. 4 dargestellten Halteposition zurück in die in Fig. 3 dargestellte Einsteckposition gedrückt werden, aus der er dann ohne weiteres entnommen werden könnte.

Um besonders zuverlässig zu verhindern, dass der Eisblock 3 aus der Halteposition zurück in die Einsteckposition gelangt, ist beim Überführen des Eisblocks aus der Einsteckposition in die Halteposition eine gewisse Kraft zu überwinden, die im Ausführungsbeispiel durch die Dimensionierung des Eisblocks und der Aufnahme realisiert wird, denn der Eisblock weist einen Rastvorsprung 14 auf, der durch Überwinden einer Kraft an der links dargestellten Wand der Aufnahme 2 vorbeigeführt werden muss. Dieses lässt sich z.B. durch eine gewisse elastische Verformung der linken Wand der Aufnahme 2 realisieren. Wichtig ist nur, dass nach dem Erreichen der Halteposition verhindert wird, dass der Eisblock 3 ohne gezielte Krafteinwirkung zurück in die Einsteckposition gelangt. Dazu können optional auch andere Maßnahmen realisiert werden. Es ist z.B auch denkbar, den Einsteckbereich 5 mit einem elastischen Material auszufüllen, in welches der Eisblock 3 beim Einführen in die Einsteckposition eingedrückt wird. Damit besteht die Möglichkeit, den Block 3 aktiv durch einen menschlichen Benutzer in den Einsteckbereich einzudrücken und zugleich wird verhindert, dass der Eisblock beim Spielen des Tieres wieder zurück in den Einsteckbereich gelangt.

Die Figuren zeigen eine bevorzugte Ausführungsform der Erfindung, bei der ein Verzehrblock 3, insbesondere ein Eisblock 3, in der beschriebenen Weise in der taschenartigen Aufnahme 2 des Trägers 1 arretiert wird.

Die Erfindung umfasst aber auch andere Arten der Befestigung eines Eisblocks 3 in einer taschenartigen Aufnahme 2, bei der es sich um eine offene Kammer handelt, in die ein Eisblock eingesetzt wird, der vorzugsweise mit seiner Oberfläche über diese Öffnung hervorragt. Der Eisblock 3 kann formschlüssig und/oder kraftschlüssig in der Aufnahme befestigt sein, z.B. eingerastet, eingeclipst und/oder eingeklemmt.

Von besonderer Bedeutung ist dabei die konstruktive Anpassung der Geometrie einer in Fig. 5 lediglich beispielhaft dargestellten Zubereitungsform 17 an die Geometrie einer in den übrigen Figuren lediglich beispielhaft dargestellten Aufnahme 2 eines Trägers 1, so dass bevorzugt ein Träger 1 und eine darauf abgestimmte Zubereitungsform 17 in Kombination zur Verfügung gestellt werden.

Die konkrete Ausbildung des Trägers 1 ist in den Figuren lediglich beispielhaft dargestellt. Der Träger kann auch eine andere, für das Spielen eines Haustiers geeignete Formgebung aufweisen.

**In** der Figurenbeschreibung wird die Erfindung lediglich beispielhaft anhand einer bevorzugten Ausführungsform beschrieben, bei welcher der Verzehrblock 3 vorzugsweise als Eisblock 3 ausgebildet ist. Bei dem in den Figuren dargestellten Verzehrblock 3 kann es sich aber auch um einen Verzehrblock anderer Art, z.B. einen Verzehrblock als Keks, Kuchen und folglich als Backware/Backprodukt handeln. Solche Verzehrblöcke als Backwaren lassen sich ebenso in der in Fig. 3 dargestellten Zubereitungsform 17 herstellen, z.B. in einem Backofen.

## Patentansprüche

1. Beschäftigungsvorrichtung für Haustiere, insbesondere für Hunde oder Katzen, mit zumindest
einem für die Beschäftigung des Haustieres ausgebildeten Träger (1), der zumindest eine taschenartige Aufnahme (2) aufweist, in die ein vorzugsweise vollständig zum Verzehr durch das Haustier geeigneter Verzehrblock (3) einsetzbar ist,
**dadurch gekennzeichnet, dass** die taschenartige Aufnahme (2) derart ausgebildet ist, dass der Verzehrblock (3) in einer Einsteckposition in die Aufnahme (2) einführbar und aus der Einsteckposition in eine Halteposition drückbar und dadurch in der Aufnahme (2) arretierbar ist,
dass die Aufnahme (2) einen Haltebereich (4) aufweist, in dem der Verzehrblock (3) in der Halteposition gehalten ist, und einen Einsteckbereich (5), in den der Verzehrblock (3) während des Einsteckens einführbar ist, wobei der Einsteckbereich (5) nach dem Arretieren von dem Verzehrblock (3) freibleibt und wobei der Verzehrblock (3) nicht selbstständig aus dem Haltebereich (4) in den Einsteckbereich (5) gelangt.

2. Vorrichtung nach Anspruch 1, **dadurch gekennzeichnet, dass** der in die Aufnahme (2) einsetzbare Verzehrblock (3) als gefrorener Eisblock (3) ausgebildet ist, der im gefrorenen Zustand in die Aufnahme (2) einsetzbar ist.

3. Vorrichtung nach Anspruch 1 , **dadurch gekennzeichnet, dass** der Einsteckbereich (5) ein gegenüber dem Haltebereich (4) vertiefter Hohlraum ist.

4. Vorrichtung nach einem der Ansprüche 1 bis 3, **dadurch gekennzeichnet, dass** der Verzehrblock (3) nach dem Einführen in die Einsteckposition durch eine Schwenkbewegung in die Halteposition drückbar und dadurch formschlüssig in der Aufnahme (2) arretierbar ist.

5. Vorrichtung nach einem der Ansprüche 1 bis 4, **dadurch gekennzeichnet, dass** der Träger (1) als durch das Haustier nicht zerstörbares und/oder nicht verschluckbares Spielzeug ausgebildet ist und/oder dass der Träger (1) einstückig ausgebildet ist,
und/oder dass der Träger (1) aus Kunststoff oder als Verbundkörper mit zumindest Kunststoff gefertigt ist und/oder als Gussteil oder Spritzgussteil ausgebildet ist.

6. Vorrichtung nach einem der Ansprüche 1 bis 5, **dadurch gekennzeichnet, dass** die taschenartige Aufnahme (2) eine obere Öffnung (6) aufweist und dass sich der Querschnitt der Aufnahme (2) unter der Eintrittsfläche zumindest bereichsweise aufweitet.

7. Vorrichtung nach einem der Ansprüche 1 bis 6, **dadurch gekennzeichnet, dass** die taschenartige Aufnahme (2) einen gestuften Boden (7) mit einer dem Haltebereich (4) zugeordneten ersten Bodenfläche (8) und einer dem Einsteckbereich (5) zugeordneten zweiten Bodenfläche (9) aufweist, wobei die zweite Bodenfläche (9) gegenüber der ersten Bodenfläche (8) vertieft ist.

8. Vorrichtung nach einem der Ansprüche 1 bis 7 , mit zumindest einem Verzehrblock (3), **dadurch gekennzeichnet, dass** der Verzehrblock (3) derart an die taschenartige Aufnahme (2) angepasst ist, dass der Verzehrblockin der Aufnahme (2) formschlüssig und/oder kraftschlüssig gehalten ist, bevorzugt derart, dass der Verzehrblock (3) in einer Einsteckposition in die Aufnahme (2) einführbar und aus der Einsteckposition in eine Halteposition drückbar und dadurch in der Aufnahme (2) arretierbar ist.

9. Vorrichtung nach Anspruch 8 , **dadurch gekennzeichnet, dass** der Verzehrblock (3) (in der Draufsicht) eine rechteckförmige Grundfläche (10) aufweist und einen von der Rechteckform abweichenden (vertikalen) Querschnitt und/oder dass der Verzehrblock (3) zwei parallele Seitenflächen (11) und/oder gegeneinander geneigte Vorderfläche (12) und Rückfläche (13) aufweist.

10. Vorrichtung nach Anspruch 8 oder 9 , **dadurch gekennzeichnet, dass** der Verzehrblock (3) im Querschnitt asymmetrisch mit einer gegenüber der Rückfläche (13) verkürzten Vorderfläche (12) ausgebildet ist.

11. Vorrichtung nach einem der Ansprüche 1 bis 10, **dadurch gekennzeichnet, dass** der Verzehrblock (3) derart in der Halteposition gehalten ist, dass der Verzehrblock mit einer Oberfläche (16) über die Aufnahme (2) des Trägers (1) herausragt.

12. Vorrichtung nach einem der Ansprüche 1 bis 11 mit einer Zubereitungsform (17) für die Zubereitung zumindest eines Verzehrblocks (3), die zumindest einen Formraum aufweist, welcher die Außenmaße des Verzehrblocks (3) definiert.

13. Vorrichtung nach Anspruch 12, **dadurch gekennzeichnet, dass** die Zubereitungsform (17) für die Zubereitung eines Eisblocks (3) ausgebildet ist, indem in den Formraum eine Flüssigkeit einbringbar ist, die zu dem Eisblock (3) gefroren wird.

14. Vorrichtung nach Anspruch 12 oder 13, **dadurch gekennzeichnet, dass** der Formraum der Zubereitungsform (17) derart an die Geometrie der Aufnahme (2) in dem Träger (1) angepasst ist, dass ein mit der Zubereitungsform (17) hergestellter Verzehrblockformschlüssig und/oder kraftschlüssig in der Aufnahme (2) fixierbar ist.

## Claims

1. An activity device for pets, especially for dogs or cats, with at least one carrier (1) designed for keeping the pet occupied (1), which comprises at least one pocket-like receptacle (2), into which a consumption block (3) suitable for a preferably complete consumption by the pet can be inserted, **characterised in that** the pocket-like receptacle (2) is designed in such a way that the consumption block (3) can be introduced into the receptacle (2) in an insertion position and can be pushed out of the insertion position into a holding position and can thus be locked in the receptacle (2), that the receptacle (2) comprises a holding area (4), in which the consumption block (3) is held in the holding position, and an insertion area (5), into which the consumption block (3) can be introduced during the insertion, wherein the insertion area (5) remains free after the locking of the consumption block (3), and wherein the consumption block (3) does not move independently out of the holding area (4) into the insertion area(5).

2. The device according to claim 1, **characterised in that** the consumption block (3) which can be inserted into the receptacle (2) is formed as a frozen ice block (3), which can be inserted into the receptacle (2) in the frozen state.

3. The device according to claim 1, **characterised in that** the insertion area (5) is a cavity recessed with respect to the holding area (4).

4. The device according to any one of claims 1 to 3, **characterised in that** the consumption block (3), after introduction into the insertion position, can be pushed into the holding position by a swivelling movement and can thus be locked in the receptacle (2) in a form-fitting manner.

5. The device according to any one of claims 1 to 4, **characterised in that** the carrier (1) is design as a toy that cannot be destroyed and/or consumed by the pet and/or that the carrier (1) is designed in one piece, and/or that the carrier (1) is produced from plastic or as a composite body with at least some plastic and/or as a casting part or injection moulded part.

6. The device according to any one of claims 1 to 5, **characterised in that** the pocket-like receptacle (2) comprises an upper opening (6) and that the cross-section of the receptacle (2) widens in some areas under the entry area.

7. The device according to any one of claim 1 to 6, **characterised in that** the pocket-like receptacle (2) comprises a stepped bottom (7) with a first bottom area (8) assigned to the holding area (4) and a second bottom area (9) assigned to the insertion area(5), wherein the second bottom area (9) is recessed with respect to the first bottom area (8).

8. The device according to any one of claims 1 to 7, with at least one consumption block (3), **characterised in that** the consumption block (3) is matched to the pocket-like receptacle (2) in such a way that the consumption block is held in a form-fitting and/or force-fitting manner in the receptacle (2), preferably in such a way that the consumption block (3) can be introduced into the receptacle (2) in a insertion position and can be pushed out of the insertion position into a holding position and can thus locked in the receptacle (2).

9. The device according to claim 8, **characterised in that** the consumption block (3) (in plan view) has a rectangular base (10) and a (vertical) cross-section that deviates from the rectangular shape and/or that the consumption block (3) has two parallel side surfaces (11) and/or a front surface (12) and a rear surface (13) inclined against each other.

10. The device according to claim 8 or 9, **characterised in that** the consumption block (3) is asymmetrical in cross-section with a front surface (12) shortened with respect to the rear surface (13).

11. The device according to any one of claims 1 to 10, **characterised in that** the consumption block (3) is held in the holding position in such a way that the consumption block projects with a surface (16) beyond the receptacle (2) of the carrier (1).

12. The device according to any one of claims 1 to 11, comprising a preparation mould (17) for the preparation of at least one consumption block (3), which comprises at least one molding space which defines the external dimensions of the consumption block (3).

13. The device according to claim 12, **characterised in that** the preparation mould (17) is designed for the preparation of an ice block (3) by a liquid being able to be introduced into the moulding space, which is frozen to form the ice block (3).

14. The device according to claim 12 or 13, **characterised in that** the moulding space of the preparation mould (17) is matched to the geometry of the receptacle (2) in the carrier (1), in such a way that a consumption block produced with the preparation mould (17) can be fixed in the receptacle (2) in a form-fitting and/or force-fitting manner.

## Revendications

1. Dispositif destiné à occuper des animaux domestiques, en particulier pour des chiens ou des chats, avec au moins un support (1) constitué pour occuper l'animal domestique, qui comporte au moins un logement en forme de poche (2), dans lequel un bloc à consommer (3) adapté de préférence complètement à la consommation par l'animal domestique peut être inséré, **caractérisé en ce que** le logement en forme de poche (2) est constitué de telle manière que le bloc à consommer (3) peut être introduit dans une position d'emboîtage dans le logement (2) et peut être comprimé depuis la position d'emboîtage dans une position de retenue et être de ce fait bloqué dans le logement (2), **en ce que** le logement (2) comporte une zone de retenue (4) dans laquelle le bloc à consommer (3) est maintenu dans la position de retenue et une zone d'emboîtage (5) dans laquelle le bloc à consommer (3) peut être introduit pendant l'emboîtage, sachant que la zone d'emboîtage (5) reste libre après le blocage du bloc à consommer (3) et sachant que le bloc à consommer (3) ne parvient pas automatiquement de la zone de retenue (4) dans la zone d'emboîtage (5)

2. Dispositif selon la revendication 1, **caractérisé en ce que** le bloc à consommer (3) insérable dans le logement (2) est constitué sous la forme d'un bloc de glace congelé (3), qui peut être inséré à l'état congelé dans le logement (2).

3. Dispositif selon la revendication 1, **caractérisé en ce que** la zone d'emboîtage (5) est un espace creux approfondi par rapport à la zone de retenue (4).

4. Dispositif selon l'une quelconque des revendications 1 à 3, **caractérisé en ce que** le bloc à consommer (3) peut être comprimé dans la position de retenue après l'introduction dans la position d'emboîtage par un mouvement de pivotement et être bloqué de ce fait par conformité de forme dans le logement (2).

5. Dispositif selon l'une quelconque des revendications 1 à 4, **caractérisé en ce que** le support (1) est constitué sous la forme d'un jouet non destructible et/ou non avalable par l'animal domestique et/ou **en ce que** le support (1) est constitué en une seule pièce, et/ou **en ce que** le support (1) est fabriqué en matière plastique ou sous la forme d'un corps composite avec au moins de la matière plastique et/ou est constitué sous la forme d'une pièce moulée ou d'une pièce moulée par injection.

6. Dispositif selon l'une quelconque des revendications 1 à 5, **caractérisé en ce que** le logement en forme de poche (2) comporte une ouverture supérieure (6) et **en ce que** la section transversale du logement (2) s'élargit au moins en partie sous la face d'entrée.

7. Dispositif selon l'une quelconque des revendications 1 à 6, **caractérisé en ce que** le logement en forme de poche (2) comporte un fond étagé (7) avec une première surface de fond (8) attribuée à la zone de retenue (4) et une deuxième surface de fond (9) attribuée à la zone d'emboîtage (5), sachant que la deuxième surface de fond (9) est plus profonde par rapport à la première surface de fond (8).

8. Dispositif selon l'une quelconque des revendications 1 à 7, avec au moins un bloc à consommer (3), **caractérisé en ce que** le bloc à consommer (3) est adapté au logement en forme de poche (2) de telle sorte que le bloc à consommer est maintenu dans le logement (2) par conformité de forme et/ou par conformité de force, de préférence, de telle manière que le bloc à consommer (3) peut être introduit dans une position d'emboîtage dans le logement (2) et peut être comprimé de la position d'emboîtage à une position de retenue et être de ce fait bloqué dans le logement (2).

9. Dispositif selon la revendication 8, **caractérisé en ce que** le bloc à consommer (3) comporte (en vue de dessus) une surface de base rectangulaire (10) et comporte une section transversale (verticale) s'écartant de la forme rectangulaire et/ou **en ce que** le bloc à consommer (3) comporte deux surfaces latérales parallèles (11) et/ou une surface avant (12) et une surface arrière (13) inclinées l'une contre l'autre.

10. Dispositif selon la revendication 8 ou 9, **caractérisé en ce que** le bloc à consommer (3) est constitué de façon asymétrique en section avec une surface avant (12) raccourcie par rapport à la surface arrière (13).

11. Dispositif selon l'une quelconque des revendications 1 à 10, **caractérisé en ce que** le bloc à consommer (3) est maintenu dans la position de retenue de telle manière que le bloc à consommer dépasse avec une surface supérieure (16) au-dessus du logement (2) du support (1).

12. Dispositif selon l'une quelconque des revendications 1 à 11, avec une forme de préparation (17) pour la préparation d'au moins un bloc à consommer (3), qui comporte au moins un espace formé, lequel définit les dimensions extérieures du bloc à consommer (3).

13. Dispositif selon la revendication 12, **caractérisé en ce que** la forme de préparation (17) est constituée pour la préparation d'un bloc de glace (3), un liquide pouvant être introduit dans l'espace formé, qui est congelé en bloc de glace (3).

14. Dispositif selon la revendication 12 ou 13, **caractérisé en ce que** l'espace formé de la forme de préparation (17) est adapté à la géométrie du logement (2) dans le support (1) de telle sorte qu'un bloc à consommer fabriqué avec la forme de préparation (17) peut être fixé par conformité de forme et/ou conformité de force dans le logement (2).
